(19) Europäisches Patentamt

European Patent Office

Office européen des brevets

(11) Veröffentlichungsnummer: **0 244 565**
**B1**

(12) **EUROPÄISCHE PATENTSCHRIFT**

(45) Veröffentlichungstag der Patentschrift:
30.05.90

(21) Anmeldenummer: 87101607.7

(22) Anmeldetag: 06.02.87

(51) Int. Cl.⁵: **C02F 1/78**

(54) **Verfahren zur Beladung von Leitungswasser mit Ozon unter Verwendung einer ozonerzeugenden, mit einem Feststoffelektrolyten ausgestatteten Elektrolysezelle.**

(30) Priorität: 11.03.86 CH 995/86

(43) Veröffentlichungstag der Anmeldung:
11.11.87 Patentblatt 87/46

(45) Bekanntmachung des Hinweises auf die Patenterteilung:
30.05.90 Patentblatt 90/22

(84) Benannte Vertragsstaaten:
BE CH DE FR GB LI

(56) Entgegenhaltungen:
EP-A- 0 068 522
US-A- 4 316 787

(73) Patentinhaber: BBC Brown Boveri AG, Haselstrasse,
CH-5401 Baden(CH)

(72) Erfinder: Baumann, Hans, Dr., Brunnengässli 5,
CH-5452 Staretschwil(CH)
Erfinder: Christen, Hans-Jörg, Rosenstrasse 6,
CH-5417 Untersiggenthal(CH)
Erfinder: Klein, Hans-Peter, Dr., Boldistrasse 84,
CH-5415 Rieden b. Nussbaumen(CH)
Erfinder: Stucki, Samuel, Dr., Sternenstrasse 7,
CH-5415 Nussbaumen(CH)

## Beschreibung

Die Erfindung geht aus von einem Verfahren zur Beladung von Leitungswasser mit Ozon nach der Gattung des Oberbegriffs des Patentanspruchs.

Zur Entkeimung von Leitungswasser wird oft von dessen Beladung mit Ozon Gebrauch gemacht. Dabei können die herkömmlichen Verfahren in folgende Teilschritte unterteilt werden:
– Luft-Aufbereitung (Trocknung)
– Ozonherstellung durch stille elektrische Entladung
– Inberührungbringen des Leitungswassers mit dem ozonhaltigen Luftstrom (z.B. in einer Blasensäule)
– Beseitigung des Restozons

Vergl. zum Beispiel C.M. Robson, «Design Engineering Aspects of Ozonation Systems», Handbook of Ozone Technology and Applications, R.G. Rice and A. Netzer, Eds., Vol. 1, Ann Arbor, 1982.

Die herkömmlichen Verfahren bedingen in der Regel aufwendige und kostspielige Vorrichtungen, insbesondere was die Vermischung des Leitungswassers mit der ozonhaltigen Luft betrifft.

Es ist schon vorgeschlagen worden, Ozon auf elektrolytischem Wege unter Zuhilfenahme von sehr reinem Wasser herzustellen (Vergl. H.-P. Klein und S. Stucki, «The Production of Ozone by Elektrolysis and its Application in high purity Water Systems», Conference Proceedings 7th Ozone World Congress, 9–12 Sept. 1985, Tokyo; US-A 4 416 747).

In der EP-A 0 068 522 ist ein Verfahren sowie eine Vorrichtung zur Ozonisierung von Gebrauchswässern (Trinkwasser, Abwasser, etc.) durch Anwendung der synthetischen $O_3$-Herstellung mittels Elektrolyse unter Verwendung eines organischen Feststoffelektrolyten beschrieben. Dabei kann auch ein Teilstrom des zu behandelnden Mediums zugeführt werden. Es wird hiermit eine vergleichsweise konzentrierte $O_3$-Lösung in den Hauptstrom injiziert.

Für die Dotierung von Leitungswasser mit Ozon sind die oben beschriebenen Verfahren weniger gut geeignet, da grosse Mengen gefördert werden müssen und sich ein beträchtlicher apparativer Aufwand ergibt. Bei direkter Verwendung des elektrolytischen Verfahrens würde die Zelle in verhältnismässig kurzer Zeit durch die im Leitungswasser vorhandenen zweiwertigen Kationen blockiert, so dass deren unmittelbare Verwendung unwirtschaftlich wäre.

Es besteht daher ein Bedürfnis nach Verbesserung und Vereinfachung der bekannten Methoden und Vorrichtungen.

Der Erfindung liegt die Aufgabe zugrunde, ein Verfahren anzugeben, mit dessen Hilfe Leitungswasser auf einfache und wirtschaftliche Weise und ohne grossen apparativen Aufwand mit Ozon dotiert werden kann.

Diese Aufgabe wird durch die im kennzeichnenden Teil des Patentanspruchs angegebenen Merkmale gelöst.

Die Erfindung wird anhand des nachfolgenden, durch eine Figur näher erläuterten Ausführungsbeispiels beschrieben.

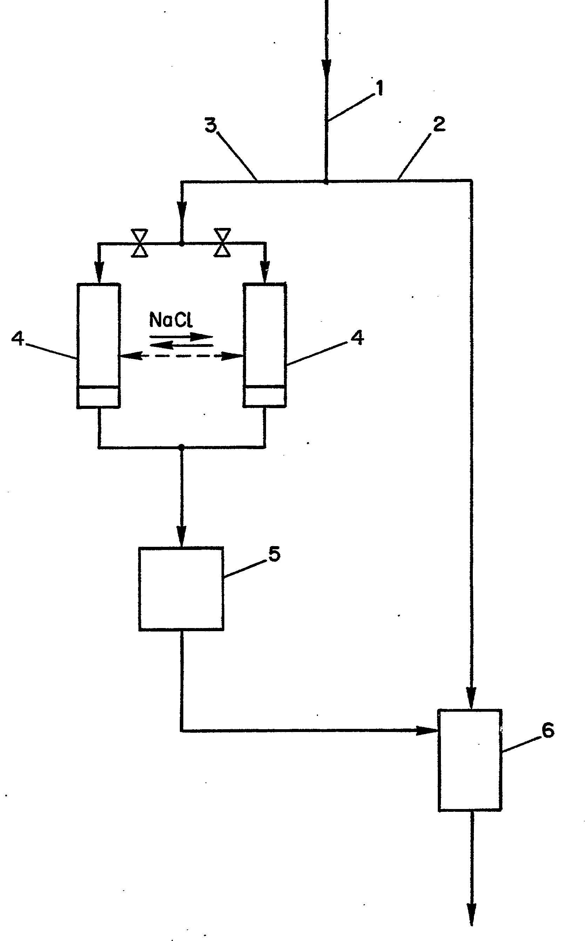

Dabei zeigt die Figur ein Fliessbild des Verfahrens bzw. den schematischen Aufbau einer entsprechenden Vorrichtung. 1 ist der der Vorrichtung zugeführte Frischwasserstrom, welcher im Eintritt in den Hauptstrom 2 und den Nebenstrom 3 aufgeteilt wird. 4 ist eine über zwei Absperrhahnen mit 3 verbundene zweiteilige Wasserenthärtungsanlage deren einzelne Kammern (4a, 4b) abwechslungsweise betrieben werden. Die intermittierende Zufuhr von NaCl als Regeneriersalz ist durch Pfeile angedeutet. 5 stellt eine Elektrolysezelle mit Feststoffelektrolyt dar, welche den entsalzten Nebenstrom 3 mit Ozon dotiert. Die beiden Ströme 2 und 3 werden im Mischer 6 wieder zusammengeführt und innig vermischt.

Ausführungsbeispiel:

Ein Verfahren gemäss Figur wies die nachfolgenden Betriebsparameter auf:

| | |
|---|---|
| Systemdruck des Leitungswassers (Frischwasserstrom): | 10 bar |
| Frischwassermenge (1): | $2\ m^3/h$ |
| Wassermenge im Hauptstrom (2): | $1,97\ m^3/h$ |
| Wassermenge im Nebenstrom (3): | $0,03\ m^3/h$ |
| Betriebsstrom der $O_3$-Zelle (5): | 40 A |
| Entsprechende Stromdichte: | $1,33\ A/cm^2$ |
| Elektrodenfläche der $O_3$-Zelle: | $30\ cm^2$ |
| Zellenspannung: | 4,1 V |
| $O_3$-Konzentration hinter der Zelle (5): | $60\ g/m^3$ |
| $O_3$-Konzentration hinter dem Mischer (6): | $0,9\ g/m^3$ |

Als Wasserenthärtungsanlage 4 wurden zwei Kationenaustauschersäulen benutzt, welche periodisch mit NaCl-Lösung regeneriert wurden. Dieser Tandembetrieb gestattete eine kontinuierliche Arbeitsweise. Von der Wasserenthärtungsanlage 4 wurde der Nebenstrom 3 in den Anodenraum einer Elektrolysezelle geleitet. Letztere war mit einem Feststoffelektrolyten in Form einer perfluorierten Ionenaustauschermembran (Handelsname "Nafion" von Du Pont) ausgerüstet. Beidseits der Membran befanden sich poröse Elektroden, welche mit einer Flächenpressung von $400\ N/cm^2$ gegeneinander gedrückt wurden. Die positive Elektrode (Anode) bestand aus einer 1 mm dicken, mit $PbO_2$ überzogenen porösen Titanplatte, während als negative Elektrode (Kathode) ein poröser Verbundkörper aus Graphit und Polytetrafluoräthylen diente. Zwischen der Kathode und dem Feststoffelektrolyt war eine dünne, als Elektrokatalysator wirkende Platinschicht angeordnet.

Fliesst ein Gleichstrom durch die Elektrolysezelle, so wird an der Anode eine Mischung aus Sauerstoff und Ozon entwickelt. Das Verhältnis $O_2$ zu $O_3$ beträgt im Durchschnitt wie 85 Gew.-% zu 15 Gew.-%.

Unmittelbar hinter der Elektrolysezelle 5 war eine Sonde zur Messung der im Wasser des Nebenstroms 3 gelösten prozentualen Ozonmenge angebracht. Im Mischer 6 wurde der ozonhaltige Nebenstrom 3 mit dem Hauptstrom 2 vereinigt. Der Mischer 6 war als statischer Mischer ausgeführt.

Die Vorteile dieses Verfahrens bestehen darin, dass die Wasserenthärtungsanlage 4 und die Elektrolysezelle 5 nur für die Wassermenge des Nebenstroms 3 dimensioniert werden müssen und eine Vergiftung der Elektrolysezelle durch zweiwertige, im Leitungswasser enthaltene Kationen (vor allem Kalzium) unterbleibt. Der Mengenanteil des Nebenstromes 3 beträgt 0,5 bis 3 Vol.-% der Menge des Frischwasserstroms 1, wobei seine Ozonkonzentration nach der Elektrolysezelle 5 30–120 g pro m3 $H_2O$ erreicht.

## Patentanspruch

Verfahren zur Beladung von Leitungswasser mit Ozon nach der Methode der Wasserelektrolyse mittels Feststoffelektrolyt, dadurch gekennzeichnet, dass der Frischwasserstrom (1) in einen Hauptstrom (2) und einen Nebenstrom (3) aufgeteilt wird, dass das Wasser des Nebenstroms (3) in einer Wasserenthärtungsanlage (4) enthärtet und einer Elektrolysezelle (5) zugeführt und mit Ozon beladen wird und dass der auf diese Weise dotierte Nebenstrom mit dem Hauptstrom (2) in einem Mischer (6) vereinigt wird, wobei der Nebenstrom (3) 0,5 bis 3 Vol.-% der Menge des Frischwasserstroms (1) ausmacht und seine Ozonkonzentration nach der Elektrolysezelle (5) 30 – 120 g pro m3 $H_2O$ beträgt.

## Claim

Process for ozonizing tap water by the water electrolysis method using a solid electrolyte, characterized in that the freshwater stream (1) is divided into a mainstream (2) and a sidestream (3), in that the water of the sidestream (3) is softened in a water-softening unit (4) and is fed to an electrolytic cell (5) and ozonized, and in that the resulting doped sidestream is combined with the mainstream (2) in a mixer (6), the sidestream (3) amounting to 0.5 to 3% by volume of the rate of the freshwater stream (1) and its ozone concentration downstream of the electrolytic cell (5) being 30 – 120 g per m3 of $H_2O$.

## Revendication

Procédé pour charger d'ozone de l'eau de distribution par la méthode de l'électrolyse de l'eau à l'aide d'un électrolyte solide, caractérisé en ce que le courant d'eau fraîche (1) est divisé en un courant principal (2) et un courant secondaire (3), que l'eau du courant secondaire (3) est adoucie dans une installation

3

d'adoucissement de l'eau (4) et amenée à une cellule d'électrolyse (5) et chargée d'ozone et que le courant secondaire (3) ainsi dopé est réuni avec le courant principal (2) dans un mélangeur (6), le courant secondaire (3) représentant 0,5 à 3% en volume de la quantité du courant d'eau fraîche (1) et sa concentration en ozone à l'aval de la cellule d'électrolyse (5) étant de 30 à 120 g par $m^3$ de $H_2O$.